# FASCICULE DE BREVET EUROPEEN

(11) **EP 2 549 146 B1**
(45) Date de publication et mention de la délivrance du brevet: **17.12.2014**
(21) Numéro de dépôt: 12177076.2
(22) Date de dépôt: 19.07.2012
(51) Int. Cl.: F16H 55/06, F16H 55/22

(54) **Roue d'engrenage d'un réducteur à vis sans fin**
Zahnrad eines Reduziergetriebes mit Schnecke
Gear wheel for worm reducer

(30) Priorité: 21.07.2011 FR 1156602
(43) Date de publication de la demande: 23.01.2013
(73) Titulaire: Jtekt Europe, 69540 Irigny (FR)
(72) Inventeur: Plataret, Nicolas, 69630 CHAPONOST (FR); Chauvrat, Philippe, 01480 VILLENEUVE (FR); Besnault, Vianney, 69520 GRIGNY (FR); Debattista, Christophe, 21280 Pontarlier sur Saône (FR)
(74) Mandataire: Chevalier, Renaud Philippe

(56) Documents cités:
- DE-A1- 10 119 235
- DE-B4- 10 192 745
- JP-A- 61 070 269
- JP-A- 2006 336 814
- US-A- 3 703 756
- ANONYMOUS: "Metal reinforced plastic pinion gear", RESEARCH DISCLOSURE, MASON PUBLICATIONS, HAMPSHIRE, GB, vol. 343, no. 119, 1 novembre 1992 (1992-11-01), XP007118395, ISSN: 0374-4353

## Description

La présente invention se rapporte à une roue d'engrenage d'un réducteur à vis sans fin.

Une roue d'engrenage d'un réducteur à vis sans fin connue de l'état de la technique comporte :
- un moyeu métallique,
- une denture dite externe agencée en périphérie du moyeu, la denture externe étant réalisée dans un matériau plastique.

La réalisation de la denture externe dans un matériau plastique est particulièrement avantageuse relativement à une denture externe métallique dans la mesure où elle permet de réduire significativement les bruits d'engrènement sous efforts.

La denture externe d'une telle roue d'engrenage de l'état de la technique subit des efforts d'engrènement importants avec la vis sans fin, notamment dans le domaine technique des directions assistées électriques pour véhicules automobiles où les contraintes d'encombrement et d'effort d'assistance sont primordiales.

Ces efforts d'engrènement importants conduisent à différents modes de casse de la denture externe, la rupture en pied de dent étant le mode de casse le plus usuel.

Par ailleurs, les matériaux plastiques utilisés actuellement, notamment dans le domaine technique des directions assistées électriques de véhicules automobiles, arrivent à leur limite de performance.

Document DE 101 19 235 A1 est considéré comme étant de l'art le plus proche et montre le préambule de la revendication 1.

La présente invention vise à remédier en tout ou partie aux inconvénients précédemment exposés.

A cet effet, l'invention concerne une roue d'engrenage d'un réducteur à vis sans fin, la roue d'engrenage comportant :
- un moyeu présentant une zone périphérique,
- une denture dite externe réalisée dans un matériau plastique, la denture externe étant destinée à être en prise avec la vis sans fin,
la roue d'engrenage étant remarquable en ce que la zone périphérique du moyeu comporte une denture dite interne présentant un alignement radial avec la denture externe de manière à transférer des efforts d'engrènement de la denture externe vers le moyeu.

Ainsi, une telle denture interne du moyeu permet d'améliorer la tenue mécanique de la denture externe tout en conservant une réalisation de ladite denture externe dans un matériau plastique avec des bruits d'engrènement réduits sous efforts. L'amélioration de la tenue mécanique provient du transfert des efforts d'engrènement de la denture externe vers le moyeu.

Dans un mode de réalisation de l'invention, le matériau plastique de la denture externe présente un module d'élasticité prédéterminé, et le moyeu est réalisé dans un matériau présentant un module d'élasticité supérieur au module d'élasticité dudit matériau plastique.

Un tel choix de matériau pour le moyeu permet d'améliorer l'efficacité du transfert des efforts d'engrènement de la denture externe vers le moyeu.

Selon une forme d'exécution de l'invention, la denture externe recouvre entièrement la denture interne du moyeu.

Ainsi, le sommet de la denture interne n'est pas apparent, ce qui garantit une bonne tenue mécanique, thermique et dans le temps de l'engrénage.

Selon l'invention, les dents de la denture interne du moyeu comportent chacune une première surface radiale et une seconde surface radiale opposée axialement, et la première surface radiale et/ou la seconde surface radiale comporte au moins un renfoncement adapté pour retenir le matériau plastique de la denture externe.

De tels renfoncements garantissent une bonne accroche radiale du matériau plastique de la denture externe sur la denture interne du moyeu. Toute propension de la denture externe à fluer vers l'extérieur est donc limitée, améliorant ainsi la tenue en fatigue de l'engrenage.

Selon une forme d'exécution, les dents de la denture interne du moyeu comportent chacune une partie axiale présentant :
- deux portions d'extrémité rectilignes s'étendant sensiblement parallèlement à l'axe de rotation de la roue d'engrenage,
- une portion centrale reliant les deux portions d'extrémité entre elles, la portion centrale étant inclinée relativement à l'axe de rotation de la roue d'engrenage.

Ainsi, une telle denture interne du moyeu possède un comportement mécanique proche d'une denture hélicoïdale, l'inclinaison de la portion centrale correspondant à l'angle d'hélice. Une telle denture interne du moyeu est particulièrement avantageuse en comparaison avec une denture strictement hélicoïdale dans la mesure où elle est beaucoup plus simple à fabriquer par moulage. En effet, un moule d'injection pour une denture hélicoïdale à fort angle d'hélice et/ou forte largeur axiale de roue d'engrenage est extrêmement complexe et coûteux notamment pour réaliser le mouvement d'hélice suivant l'axe de rotation de l'engrenage.

Avantageusement, la plus grande distance séparant les portions d'extrémité de deux dents adjacentes de la denture interne du moyeu est strictement supérieure à la somme des plus grandes distances séparant les portions d'extrémité de chacune desdites dents adjacentes, lesdites distances étant mesurées suivant une direction orthoradiale.

Une telle configuration géométrique de la denture interne du moyeu permet de définir un interstice axial continu entre deux dents adjacentes, l'interstice s'étendant suivant l'axe de rotation de la roue d'engrenage. Une telle configuration géométrique garantit un démoulage aisé dans l'axe de rotation de la roue d'engrenage.

Avantageusement, la denture interne du moyeu présente une hauteur radiale sensiblement égale à la hauteur radiale de la denture externe.

Une telle configuration géométrique permet d'obtenir des têtes de la denture interne du moyeu et de la denture externe suffisamment proches pour améliorer l'efficacité du transfert des efforts d'engrènement de la denture externe vers le moyeu.

Selon une caractéristique avantageuse, la denture interne du moyeu présente une épaisseur comprise entre 30 % et 70 % de l'épaisseur de la denture externe, lesdites épaisseurs étant mesurées suivant une direction orthoradiale au niveau du cercle primitif de la denture externe.

Selon une forme d'exécution, la denture interne du moyeu présente une épaisseur suivant une direction orthoradiale sensiblement constante prise sous le cercle primitif de la denture externe.

Selon une caractéristique avantageuse, le moyeu est réalisé dans un matériau plastique comportant au moins une charge sélectionnée dans le groupe comportant les fibres de verre et les fibres de carbone.

Lorsque la denture interne du moyeu présente ainsi une épaisseur suivant une direction orthoradiale sensiblement constante prise sous le cercle primitif de la denture externe, un tel matériau plastique du moyeu permet d'adapter la flexibilité sous charge du moyeu en augmentant le nombre de dents de la denture interne sous charge et diminuant la contrainte en pied de dent.

D'autres caractéristiques et avantages apparaîtront dans la description qui va suivre de différents modes de réalisation d'une roue d'engrenage selon l'invention, donnés à titre d'exemples non limitatifs, en référence aux dessins annexés dans lesquels :
- la figure 1 est une vue partielle en coupe radiale d'une roue d'engrenage selon l'invention,
- la figure 2 est une vue en perspective d'une roue d'engrenage selon l'invention en l'absence de denture externe,
- la figure 3 est une vue à échelle agrandie de la roue d'engrenage illustrée à la figure 2,
- la figure 4 est une vue de dessus d'une roue d'engrenage selon l'invention représentant une denture interne hélicoïdale du moyeu,
- la figure 5 est une vue analogue à la figure 4 représentant une denture interne du moyeu selon l'invention possédant un comportement mécanique proche d'une denture hélicoïdale.

Pour les différents modes de réalisation, les mêmes références seront utilisées pour des éléments identiques ou assurant la même fonction, par souci de simplification de la description.

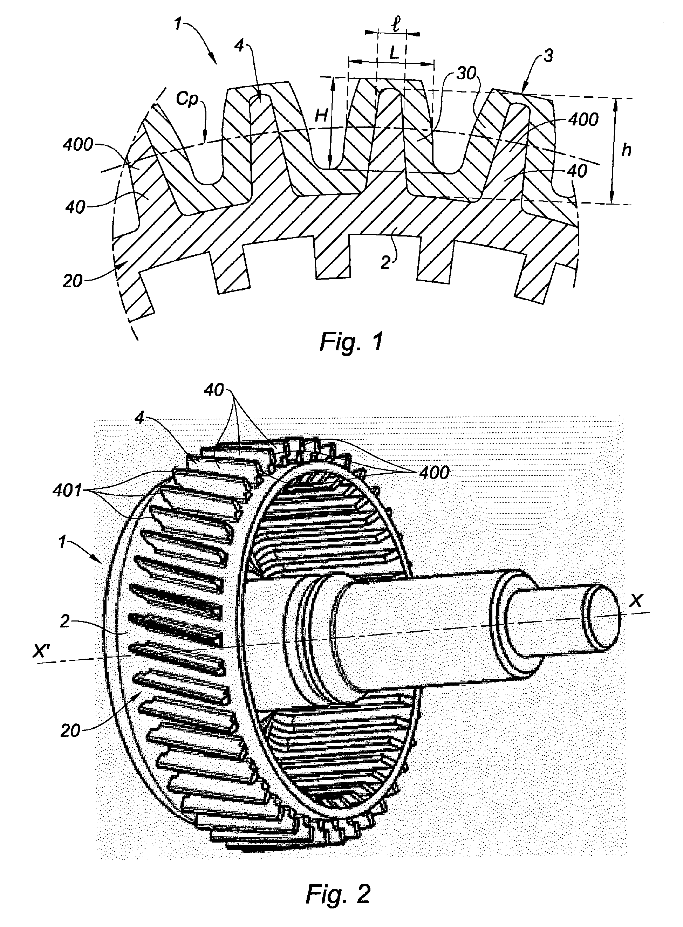

La roue d'engrenage 1 d'un réducteur à vis sans fin illustrée à la figure 1 comporte :
- un moyeu 2 présentant une zone périphérique 20,
- une denture dite externe 3 réalisée dans un matériau plastique, la denture externe 3 étant destinée à être en prise avec une vis sans fin (non représentée).

La denture externe 3 comporte un ensemble de dents 30 régulièrement réparties circonférentiellement. La denture externe 3 est de type denture droite.

Le matériau plastique dans lequel est réalisée la denture externe 3 est de préférence un polymère sélectionné dans le groupe comportant les polymères thermoplastiques, les élastomères caoutchoutiques, les élastomères thermoplastiques ou des composites élastomériques. Ce matériau plastique peut comporter des charges organiques ou inorganiques, et/ou métalliques pour assurer une action de rigidification et/ou une fonction de lubrification de l'engrenage.

La zone périphérique 20 du moyeu 2 comporte une denture dite interne 4 présentant un alignement radial avec la denture externe 3 de manière à transférer des efforts d'engrènement de la denture externe 3 vers le moyeu 2. Par « radial », on entend une direction s'étendant suivant un rayon de la roue d'engrenage 1.

La denture interne 4 du moyeu 2 comporte un ensemble de dents 40 régulièrement réparties circonférentiellement. La denture interne 4 est de type denture droite. Chaque dent 40 de la denture interne 4 peut présenter une section radiale sensiblement en forme de trapèze. La tête de chaque dent 40 de la denture interne 4 peut être légèrement bombée.

Le matériau plastique de la denture externe 3 présente un module d'élasticité prédéterminé. Le moyeu 2 peut être réalisé dans un matériau, tel qu'un matériau plastique, présentant un module d'élasticité supérieur au module d'élasticité du matériau plastique de la denture externe 3. Le moyeu 2 peut être réalisé dans un matériau plastique comportant au moins une charge sélectionnée dans le groupe comportant les fibres de verre et les fibres de carbone.

La denture externe 3 est agencée sur la denture interne 4 du moyeu 2. Préférentiellement, la denture externe 3 recouvre entièrement la denture interne 4 du moyeu 2.

La denture interne 4 du moyeu 2 présente une hauteur radiale h sensiblement égale à la hauteur radiale H de la denture externe 3.

La denture interne 4 du moyeu 2 présente une épaisseur 1 comprise entre 30 % et 70 % de l'épaisseur L de la denture externe 3, les épaisseurs étant mesurées suivant une direction orthoradiale au niveau du cercle primitif Cp de la denture externe 3. Par « orthoradiale », on entend une direction perpendiculaire à la direction radiale et à l'axe de rotation X'-X de la roue d'engrenage 1. La denture interne 4 du moyeu 2 peut présenter une épaisseur suivant une direction orthoradiale qui est sensiblement constante prise sous le cercle primitif Cp de la denture externe 3. Le cercle primitif Cp définit les zones des dents 30 de la denture externe 3 possédant la même vitesse tangentielle, approximativement à mi-hauteur radiale des dents 30.

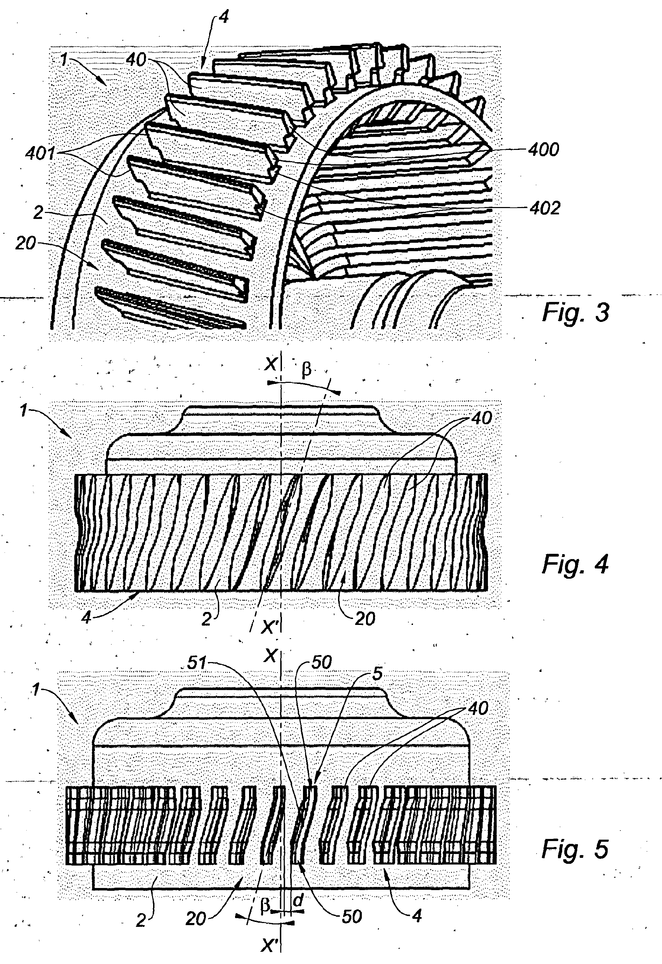

Comme visible aux figures 2 et 3, les dents 40 de la denture interne 4 du moyeu 2 comportent chacune :
- une première surface radiale 400, et
- une seconde surface radiale 401 opposée axialement.

Par « axialement », on entend relativement à l'axe de rotation X'-X de la roue d'engrenage 1.

La première surface radiale 400 et la seconde surface radiale 401 comportent chacune un renfoncement 402 formant un épaulement adapté pour retenir le matériau plastique de la denture externe 3.

En figure 4 est illustrée une denture interne 4 d'un moyeu 2 de type hélicoïdale présentant un angle d'hélice β.

Dans le mode de réalisation illustré à la figure 5, les dents 40 de la denture interne 4 du moyeu 2 comportent chacune une partie axiale 5 présentant :
- deux portions d'extrémité 50 rectilignes s'étendant sensiblement parallèlement à l'axe de rotation X'-X de la roue d'engrenage 1,
- une portion centrale 51 reliant les deux portions d'extrémité 50 entre elles, la portion centrale 51 étant inclinée relativement à l'axe de rotation X'-X de la roue d'engrenage 1 de manière à former l'angle d'hélice β.

La plus grande distance séparant les portions d'extrémité 50 de deux dents 40 adjacentes de la denture interne 4 du moyeu 2 est strictement supérieure à la somme des plus grandes distances séparant les portions d'extrémité 50 de chacune desdites dents 40 adjacentes, lesdites distances étant mesurées suivant une direction orthoradiale. En d'autres termes, la denture interne 4 du moyeu 2 permet de définir un interstice axial continu de largeur d entre deux dents 40 adjacentes, l'interstice s'étendant suivant l'axe de rotation X'-X de la roue d'engrenage 1.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention, telle que définie dans les revendications annexées.

## Revendications

1. Roue d'engrenage (1) d'un réducteur à vis sans fin, la roue d'engrenage (1) comportant :
- un moyeu (2) présentant une zone périphérique (20),
- une denture dite externe (3) réalisée dans un matériau plastique, la denture externe (3) étant destinée à être en prise avec la vis sans fin,
la zone périphérique (20) du moyeu (2) comportant une denture dite interne (4) présentant un alignement radial avec la denture externe (3) de manière à transférer des efforts d'engrènement de la denture externe (3) vers le moyeu (2),
**caractérisé en ce que** les dents (40) de la denture interne (4) du moyeu (2) comportent chacune une première surface radiale (400) et une seconde surface radiale (401) opposée axialement, et **en ce que** la première surface radiale (400) et/ou la seconde surface radiale (401) comporte au moins un renfoncement (402) adapté pour retenir le matériau plastique de la denture externe (3).

2. Roue d'engrenage (1) selon la revendication 1, **caractérisée en ce que** le matériau plastique de la denture externe (3) présente un module d'élasticité prédéterminé, et **en ce que** le moyeu (2) est réalisé dans un matériau présentant un module d'élasticité supérieur au module d'élasticité dudit matériau plastique.

3. Roue d'engrenage (1) selon la revendication 1 ou 2, **caractérisée en ce que** la denture externe (3) recouvre entièrement la denture interne (4) du moyeu (2).

4. Roue d'engrenage (1) selon l'une des revendications 1 à 3, **caractérisée en ce que** les dents (40) de la denture interne (4) du moyeu (2) comportent chacune une partie axiale (5) présentant :
- deux portions d'extrémité (50) rectilignes s'étendant sensiblement parallèlement à l'axe de rotation (X'-X) de la roue d'engrenage (1),
- une portion centrale (51) reliant les deux portions d'extrémité (50) entre elles, la portion centrale (51) étant inclinée relativement à l'axe de rotation (X'-X) de la roue d'engrenage (1).

5. Roue d'engrenage (1) selon l'une quelconque des revendications 1 à 4, **caractérisée en ce que** la plus grande distance séparant les portions d'extrémité (50) de deux dents (40) adjacentes de la denture interne (4) du moyeu (2) est strictement supérieure à la somme des plus grandes distances séparant les portions d'extrémité (50) de chacune desdites dents (40) adjacentes, lesdites distances étant mesurées suivant une direction orthoradiale.

6. Roue d'engrenage (1) selon la revendication 5, **caractérisée en ce que** la denture interne (4) du moyeu (2) présente une hauteur radiale (h) sensiblement égale à la hauteur radiale (H) de la denture externe (3).

7. Roue d'engrenage (1) selon l'une des revendications 1 à 6, **caractérisée en ce que** la denture interne (4) du moyeu (2) présente une épaisseur (I) comprise entre 30 et 70 % de l'épaisseur (L) de la denture externe (3), lesdites épaisseurs étant mesurées suivant une direction orthoradiale au niveau du cercle primitif (Cp) de la denture externe (3).

8. Roue d'engrenage (1) selon l'une des revendications 1 à 7, **caractérisée en ce que** la denture interne (4) du moyeu (2) présente une épaisseur suivant une direction orthoradiale sensiblement constante prise sous le cercle primitif (Cp) de la denture externe (3).

9. Roue d'engrenage (1) selon l'une des revendications 1 à 8, **caractérisée en ce que** le moyeu (2) est réalisé dans un matériau plastique comportant au moins une charge sélectionnée dans le groupe comportant les fibres de verre et les fibres de carbone.

## Patentansprüche

1. Zahnrad (1) eines Reduziergetriebes mit Schnecke, wobei das Zahnrad (1) Folgendes umfasst:
- eine Nabe (2), die einen peripheren Bereich (20) aufweist,
- eine Zahnung, genannt extern (3), die aus einem Plastikmaterial hergestellt ist, wobei die externe Zahnung (3) ausgelegt ist, um mit der Schnecke einzugreifen,
wobei der periphere Bereich (20) der Nabe (2) eine Zahnung, genannt intern (4), aufweist, die eine radiale Ausfluchtung mit der externen Zahnung (3) aufweist, um Eingriffskräfte der externen Zahnung (3) hin zur Nabe (2) zu übertragen,
**dadurch gekennzeichnet, dass** die Zähne (40) der internen Zahnung (4) der Nabe (2) jeweils eine erste radiale Fläche (400) und eine zweite radiale Fläche (401) aufweisen, die axial gegenüber liegt, und dadurch, dass die erste radiale Fläche (400) und/oder die zweite radiale Fläche (401) mindestens eine Verstärkung (402) umfasst, die ausgelegt ist, um das Plastikmaterial der externen Zahnung (3) zurückzuhalten.

2. Zahnrad (1) nach Anspruch 1, **dadurch gekennzeichnet, dass** das Plastikmaterial der externen Zahnung (3) ein vorbestimmtes Elastizitätsmodul aufweist, und dadurch, dass die Nabe (2) aus einem Material hergestellt ist, das ein Elastizitätsmodul aufweist, das größer als das Elastizitätsmodul des Plastikmaterials ist.

3. Zahnrad (1) nach Anspruch 1 oder 2, **dadurch gekennzeichnet, dass** die externe Zahnung (3) die interne Zahnung (4) der Nabe (2) vollständig abdeckt.

4. Zahnrad (1) nach einem der Ansprüche 1 bis 3, **dadurch gekennzeichnet, dass** die Zähne (40) der internen Zahnung (4) der Nabe (2) jeweils einen axialen Teil (5) umfassen, der Folgendes aufweist:
- zwei geradlinige Endabschnitte (50), die sich im Wesentlichen parallel zur Drehachse (X'-X) des Zahnrads (1) erstrecken,
- einen zentralen Abschnitt, (51) der die zwei Endabschnitte (50) untereinander verbindet, wobei der zentrale Abschnitt (51) relativ zur Drehachse (X'-X) des Zahnrads (1) geneigt ist.

5. Zahnrad (1) nach einem der Ansprüche 1 bis 4, **dadurch gekennzeichnet, dass** der größte Abstand, der die Endabschnitte (50) von zwei benachbarten Zähnen (40) der internen Zahnung (4) der Nabe (2) trennt, strikt größer als die Summe der größten Abstände ist, die die Endabschnitte (50) jedes der benachbarten Zähne (40) trennt, wobei die Abstände gemäß einer orthoradialen Richtung gemessen werden.

6. Zahnrad (1) nach Anspruch 5, **dadurch gekennzeichnet, dass** die interne Zahnung (4) der Nabe (2) eine radiale Höhe (h) aufweist, die im Wesentlichen gleich der radialen Höhe (H) der externen Zahnung (3) ist.

7. Zahnrad (1) nach einem der Ansprüche 1 bis 6, **dadurch gekennzeichnet, dass** die interne Zahnung (4) der Nabe (2) eine Dicke (I) aufweist, die zwischen 30 und 70 % der Dicke (L) der externen Zahnung (3) liegt, wobei die Dicken gemäß einer orthoradialen Richtung auf der Ebene des Teilkreises (Cp) der externen Zahnung (3) gemessen werden.

8. Zahnrad (1) nach einem der Ansprüche 1 bis 7, **dadurch gekennzeichnet, dass** die interne Zahnung (4) der Nabe (2) eine Dicke gemäß einer orthoradialen Richtung aufweist, die im Wesentlichen konstant ist, genommen unter dem Teilkreis (Cp) der externen Zahnung (3).

9. Zahnrad (1) nach einem der Ansprüche 1 bis 8, **dadurch gekennzeichnet, dass** die Nabe (2) aus einem Plastikmaterial hergestellt ist, umfassend mindestens ein Einsatzmaterial, ausgewählt aus der Gruppe, bestehend aus Glasfasern und die Kohlenstofffasern.

## Claims

1. A gear wheel (1) of a worm reducer, the gear wheel (1) including:
- a hub (2) presenting a peripheral zone (20),
- a set of teeth called external set of teeth (3) made of plastic material, the external set of teeth (3) being intended to be engaged with the worm screw,
the peripheral zone (20) of the hub (2) including a set of teeth called internal set of teeth (4) presenting a radial alignment with the external set of teeth (3) so as to transfer meshing forces from the external set of teeth (3) to the hub (2),
**characterized in that** the teeth (40) of the internal set of teeth (4) of the hub (2) each include a first radial surface (400) and a second radial surface (401) axially opposite, and **in that** the first radial surface (400) and/or the second radial surface (401) include at least one recess (402) adapted to retain the plastic material of the external set of teeth (3).

2. The gear wheel (1) according to claim 1, **characterized in that** the plastic material of the external set of teeth (3) has a predetermined modulus of elasticity, and **in that** the hub (2) is made of a material presenting a modulus of elasticity higher than the modulus of elasticity of said plastic material.

3. The gear wheel (1) according to claim 1 or 2, **characterized in that** the external set of teeth (3) completely covers the internal set of teeth (4) of the hub (2).

4. The gear wheel (1) according to any of claims 1 to 3, **characterized in that** the teeth (40) of the internal set of teeth (4) of the hub (2) each include an axial part (5) presenting:
- two rectilinear end portions (50) extending substantially parallel with the axis of rotation (X'-X) of the gear wheel (1),
- a central portion (51) connecting the two end portions (50) together, the central portion (51) being inclined relative to the axis of rotation (X'-X) of the gear wheel (1).

5. The gear wheel (1) according to any one of claims 1 to 4, **characterized in that** the greatest distance separating the end portions (50) of two adjacent teeth (40) of the internal set of teeth (4) of the hub (2) is strictly greater than the sum of the greatest distances separating the end portions (50) of each of said adjacent teeth (40), said distances being measured along an orthoradial direction.

6. The gear wheel (1) according to claim 5, **characterized in that** the internal set of teeth (4) of the hub (2) presents a radial height (h) substantially equal to the radial height (H) of the external set of teeth (3).

7. The gear wheel (1) according to any of claims 1 to 6, **characterized in that** the internal set of teeth (4) of the hub (2) has a thickness (I) comprised between 30 and 70% of the thickness (L) of the external set of teeth (3), said thicknesses being measured along an orthoradial direction at the pitch circle (Cp) of the external set of teeth (3).

8. The gear wheel (1) according to any of claims 1 to 7, **characterized in that** the internal set of teeth (4) of the hub (2) presents a thickness along a substantially constant orthoradial direction taken under the pitch circle (Cp) of the external set of teeth (3).

9. The gear wheel (1) according to any of claims 1 to 8, **characterized in that** the hub (2) is made of plastic material including at least one load selected from the group including glass fibers and carbon fibers.
